# EUROPÄISCHE PATENTSCHRIFT

(11) **EP 3 642 858 B1**
(45) Veröffentlichungstag und Bekanntmachung des Hinweises auf die Patenterteilung: **10.05.2023**
(21) Anmeldenummer: 18729070.5
(22) Anmeldetag: 29.05.2018
(51) Int. Cl.: H01G 4/32, H01G 4/38, H01G 4/40, H01G 9/008, H01G 9/26, H01G 11/08, H01G 11/10, H01G 11/76, H01G 2/04, H01G 4/228

(54) **ZWISCHENKREISKONDENSATOR**
DC LINK CAPACITOR
CONDENSATEUR DE CIRCUIT INTERMÉDIAIRE

(30) Priorität: 21.06.2017 DE 102017210419
(43) Veröffentlichungstag der Anmeldung: 29.04.2020
(73) Patentinhaber: Bayerische Motoren Werke Aktiengesellschaft, 80809 München (DE)
(72) Erfinder: KOCHETOV, Sergey, 81927 München (DE); HAAS RUGEL, Erick Maximiliano, 80538 München (DE); HAMERSKI, Roman, 82008 Unterhaching (DE)
(86) Internationale Anmeldenummer: PCT/EP2018/063976
(87) Internationale Veröffentlichungsnummer: WO 2018/233987

(56) Entgegenhaltungen:
- EP-A1- 1 788 596
- JP-A- H09 308 267
- US-A- 6 028 779

## Beschreibung

Die vorliegende Erfindung betrifft einen Zwischenkreiskondensator.

Ein Zwischenkreiskondensator ist ein wichtiges Bauelement im Bereich der Leistungselektronik. Das Design des Zwischenkreiskondensators zeigt eine erhebliche Auswirkung auf das EMV-Verhalten eines Gerätes, in welchem der Zwischenkreiskondensator verbaut ist. Ferner hat das Design des Zwischenkreiskondensators auch Einfluss auf Energieverluste zwecks Rippelströmen und auch auf entstehende akustische Geräusche während einer Umschaltung. Eine Optimierung des Zwischenkreiskondensators schafft einen wesentlichen Beitrag zu der Qualität des Gerätes in welchem dieser verbaut ist und erspart Kosten für zusätzliche Maßnahmen, wie z. B. Filterung, akustische Kapselung und so weiter.

Aus dem Stand der Technik sind Zwischenkreiskondensatoren bekannt, wobei eine große Vielfalt bei der Auslegung der Kondensatoren vorliegt, die unterschiedliche Vorteile und Nachteile aufweisen. So ist es ein häufiger Nachteil, dass parasitäre Induktivitäten des Kondensators vorliegen, eine inhomogene Verteilung des Schaltstromes zwischen einzelnen Wickeln des Zwischenkreiskondensators vorliegen und oftmals auch ungünstige akustische Eigenschaften vorliegen.

Die EP1788596A1 offenbart ein Kondensatormodul gemäß dem Oberbegriff des Anspruchs 1. Die US6,028,779 offenbart einen Inverter, in dem zwei Kondensatoren über plattenförmige Elemente kontaktiert sind. Die JPH09308267A offenbart eine Kondensatoranordnung in welcher jeder Kondensator parallel zu plattenförmigen Kontaktierungsmitteln angeordnet ist. Es ist daher eine Aufgabe der Erfindung eine optimierte, differentielle Wickelstruktur eines Zwischenkondensators zu schaffen. Diese soll dabei insbesondere für Fahrzeug- und Industrieumrichter geeignet sein.

Dies wird erreicht durch einen Zwischenkreiskondensator, welcher mehrere Wickelkondensatoren, ein erstes Stromabgriffselement und ein zweites Stromabgriffselement umfasst. Die mehreren Wickel und Kondensatoren weisen dabei jeweils einen ersten Anschlusspol und einen zweiten Anschlusspol auf. Die ersten Anschlusspole sind über das erste Stromabgriffselement kontaktiert. Die zweiten Anschlusspole sind dabei über das zweite Stromabgriffselement kontaktiert. Dabei sind erste Wickelkondensatoren der Wickelkondensatoren in einer ersten Reihe angeordnet, wobei die ersten Wickelkondensatoren so ausgerichtet sind, dass die ersten Anschlusspole auf einer ersten Seite und die zweiten Anschlusspole auf einer zweite Seite des Zwischenkreiskondensators angeordnet sind, wobei die erste Seite und die zweite Seite gegenüberliegende Seiten sind. Ferner sind zweite Wickelkondensatoren der Wickelkondensatoren in einer zweiten Reihe angeordnet, wobei die erste Reihe und die zweite Reihe parallel zueinander in einer gemeinsamen Ebene angeordnet sind, wobei die zweiten Wickelkondensatoren so ausgerichtet sind, dass die ersten Anschlusspole auf der zweiten Seite und die zweiten Anschlusspole auf der ersten Seite angeordnet sind.

Ein Wickelkondensator ist ein Kondensator, welcher zumindest einen Wickel umfasst. Ein Wickel ist ein Element, in welchem mehrere Schichten, typischerweise Folien, aufgewickelt sind. Ein Stromabgriffselement ist ein Element, über welches eine von den Wickelkondensatoren bereitgestellte Spannung abgegriffen werden kann. Das bedeutet, dass die Wickelkondensatoren über die Stromabgriffselemente entladen werden können. Dies schließt jedoch nicht aus, dass die Wickelkondensatoren ebenfalls über die Stromabgriffselemente geladen werden können. Jeder der Wickelkondensatoren weist einen ersten und einen zweiten Anschlusspol auf. Die Anschlusspole sind Kontakte an den Wickelkondensatoren, über welche diese kontaktiert werden. Die Anschlusspole können gleichartige Pole sein, das bedeutet, dass der erste und der zweite Anschlusspol sowohl für eine negative als auch für eine positive Polung geeignet sind. Alternativ sind die Wickelkondensatoren gepolte Kondensatoren, wobei der erste Anschlusspol beispielsweise eine Anodenelektrode und der zweite Anschlusspol beispielsweise eine Kathodenelektrode kontaktiert.

Die ersten Wickelkondensatoren sind in einer Reihe angeordnet. Das bedeutet, dass die ersten Wickelkondensatoren aneinander angrenzend angeordnet sind. Insbesondere sind die ersten Wickelkondensatoren dabei auf einer Geraden angeordnet. Dies gilt in gleicher Weise für die zweiten Wickelkondensatoren. Die erste Reihe aus ersten Wickelkondensatoren und die zweite Reihe aus zweiten Wickelkondensatoren sind dabei zueinander parallel angeordnet. Dabei sind die ersten Wickelkondensatoren und die zweiten Wickelkondensatoren insbesondere unmittelbar aneinander angrenzend angeordnet. Eine solche Anordnung der ersten und zweiten Wickelkondensatoren weist zwei Seiten auf. Eine erste Seite, welche auch als Oberseite betrachtet werden kann, und eine zweite Seite, welche auch als Unterseite betrachtet werden kann. Die Anschlusspole der Wickelkondensatoren sind auf der ersten und auf der zweiten Seite der Wickelkondensatoren angeordnet. Es liegt somit auf jeder der Seiten eine Reihe von ersten Anschlusspolen neben einer Reihe von zweiten Anschlusspolen.

Da alle der Wickelkondensatoren über ein gemeinsames erstes Stromabgriffselement und ein gemeinsames zweites Stromabgriffselement entladen oder geladen werden können, ergibt sich in der ersten Reihe und in der zweiten Reihe ein entgegengesetzter Stromfluss durch die Wickelkondensatoren bei einem Laden oder Entladen des Zwischenkreiskondensators und somit der Wickelkondensatoren. Durch eine solche Anordnung der Wickelkondensatoren ergibt sich, dass elektrische Felder, die sich bei einem Entladen des Zwischenkreiskondensators ergeben, sich gegenseitig nahezu auslöschen. Es wird somit unter Anderem eine besonders gute EMV-Verträglichkeit erreicht. Zugleich wird ein fließender Strom gleichmäßig über alle Wickelkondensatoren verteilt, wodurch Ohm'sche Verluste verringert werden. Außerdem werden verbesserte akustische Eigenschaften erreicht, da die ersten Wickelkondensatoren und die zweiten Wickelkondensatoren einen Strom beim Entladen des Zwischenkreiskondensators in unterschiedliche Richtungen führen.

Dabei weist das erste Stromabgriffselement einen plattenförmigen ersten Teilbereich auf, welcher auf der ersten Seite mit den ersten Anschlusspolen der ersten Wickelkondensatoren in Kontakt steht, und einen zweiten Teilbereich aufweist, welcher auf der zweiten Seite mit den ersten Anschlusspolen der zweiten Wickelkondensatoren in Kontakt steht. Alternativ oder zusätzlich weist das zweite Stromabgriffselement einen plattenförmigen dritten Teilbereich auf, welcher auf der ersten Seite mit den zweiten Anschlusspolen der zweiten Wickelkondensatoren in Kontakt steht, und einen plattenförmigen vierten Teilbereich aufweist, welcher auf der zweiten Seite mit den zweiten Anschlusspolen der ersten Wickelkondensatoren in Kontakt steht. Durch solche plattenförmigen Teilbereiche wird ein besonders gleichmäßiger Stromfluss erreicht. Dadurch können die ersten Stromabgriffselemente zum einen besonders kompakt gestaltet werden, zum anderen werden lokale Spannungsspitzen oder Spitzen im Stromfluss verhindert, welche zu einer ungewollten EMV-Abstrahlung führen können. Insbesondere sind der erste bis vierte Teilbereich parallel zueinander angeordnet. Dadurch wird durch jeweils aneinander angrenzende Teilbereiche ein gegenläufiger Stromfluss erreicht, wobei sich resultierende elektrische Felder gegenseitig auslöschen können.

Auch ist es vorteilhaft, wenn der erste Teilbereich des ersten Stromabgriffselements im Bereich der zweiten Anschlusspole der zweiten Wickelkondensatoren Durchgangsöffnungen aufweist, um eine Kontaktierung zwischen den zweiten Anschlusspolen der zweiten Wickelkondensatoren und dem dritten Teilbereich des zweiten Stromabgriffselements zu ermöglichen. Alternativ oder zusätzlich ist es vorteilhaft, wenn der zweite Teilbereich des ersten Stromabgriffselements im Bereich der zweiten Anschlusspole der ersten Wickelkondensatoren Durchgangsöffnungen aufweist, um eine Kontaktierung zwischen den zweiten Anschlusspolen der ersten Wickelkondensatoren und dem vierten Teilbereich des zweiten Stromabgriffselements zu ermöglichen. Es wird somit eine besonders einfache Kontaktierung der Wickelkondensatoren ermöglicht, wobei gegenläufige Stromflüsse in dem Zwischenkreiskondensator, welche zu einer gegenseitigen Auslöschung elektrischer Felder führen, weitgehend erhalten bleiben.

Auch ist es vorteilhaft, wenn das erste Stromabgriffselement einen plattenförmigen ersten Verbindungsbereich aufweist, welcher den ersten Teilbereich mit dem zweiten Teilbereich verbindet, das zweite Stromabgriffselement einen plattenförmigen zweiten Verbindungsbereich aufweist, welcher den dritten Teilbereich mit dem vierten Teilbereich verbindet, wobei der erste Verbindungsbereich parallel zu dem zweiten Verbindungsbereich angeordnet ist. Dabei sind der erste Verbindungsbereich und der zweite Verbindungsbereich insbesondere auf einer gemeinsamen Seite der Wickelkondensatoren angeordnet. Somit wird es ebenfalls für diesen Bereich, in dem die Verbindungsbereiche angeordnet sind, gewährleistet, dass elektromagnetische Felder durch einen gegenläufigen Stromfluss verringert werden.

Auch ist es vorteilhaft, wenn der erste Teilbereich parallel zu dem dritten Teilbereich angeordnet ist und der zweite Teilbereich parallel zu dem vierten Teilbereich angeordnet ist, wobei der erste Teilbereich, der zweite Teilbereich und der erste Verbindungsbereich des ersten Stromabgriffselements zwischen dem zweiten Stromabgriffselement und den Wickelkondensatoren angeordnet sind. Dies bedeutet mit anderen Worten, dass das erste Stromabgriffselement von dem zweiten Stromabgriffselement umgriffen wird. Das erste Stromabgriffselement weist somit im Wesentlichen die Form eines U's auf. Auch das zweite Stromabgriffselement weist im Wesentlichen die Form eines U's auf, wobei das von dem ersten Stromabgriffselement gebildete U in dem von dem zweiten Stromabgriffselement gebildeten U liegt. Somit wird gleichzeitig eine Fixierung der Wickelkondensatoren und eine Kontaktierung der Wickelkondensatoren ermöglicht, wobei gleichzeitig auf allen Seiten der Wickelkondensatoren elektrisch auftretende Felder minimiert werden.

Ferner ist es vorteilhaft, wenn der erste Teilbereich des ersten Stromabgriffselements und der dritte Teilbereich des zweiten Stromabgriffselements sich über alle auf der ersten Seite gelegenen Anschlusspole hinweg erstrecken. Alternativ oder zusätzlich ist es vorteilhaft, wenn der zweite Teilbereich des ersten Stromabgriffselements und der vierte Teilbereich des zweiten Stromabgriffselements sich über alle auf der zweiten Seite gelegenen Anschlusspole hinweg erstrecken. Dabei ist es insbesondere vorteilhaft, wenn der erste Teilbereich des ersten Stromabgriffselements und der dritte Teilbereich des zweiten Stromabgriffselements einen identischen Bereich auf der ersten Seite der Wickelkondensatoren bedecken. Dies gilt in entsprechender Weise für den zweiten Teilbereich des ersten Stromabgriffselements und den vierten Teilbereich des zweiten Stromabgriffselements. Dadurch, dass auf diese Weise keine Bereiche vorliegen, in denen nur eines der Stromabgriffselemente vorhanden ist, kann es zu einer vollständigen Kompensierung von elektrischen Felder durch gegenläufige Stromflüsse kommen.

Auch ist es vorteilhaft, wenn die Wickelkondensatoren jeweils zwei gegenläufig gewickelte Wickeln umfassen. Somit wird auch ein von den einzelnen Wickelkondensatoren erzeugtes elektrisches Feld minimiert.

Ferner ist es vorteilhaft, wenn jeder der Wickelkondensatoren jeweils zwei erste Anschlusspole und zwei zweite Anschlusspole umfasst. Auf diese Weise können Bereiche mit hoher Stromdichte verringert werden.

Auch ist es vorteilhaft, wenn das erste Stromabgriffselement und das zweite Stromabgriffselement jeweils einen Zuleitungsbereich umfasst, wobei die Zuleitungsbereiche parallel zueinander geführt sind. Insbesondere ist es vorteilhaft, wenn die Zuleitungsbereiche zugleich als Halterungselemente dienen. Somit kann auch ein resultierendes elektrisches Feld in der Peripherie des Zwischenkreiskondensators geringgehalten werden.

Zudem ist es vorteilhaft, wenn die ersten Wickelkondensatoren in Richtung einer zwischen den ersten Anschlusspolen und den zweiten Anschlusspolen der ersten Wickelkondensatoren verlaufenden Hochachse versetzt gegenüber den zweiten Wickelkondensatoren angeordnet sind. Alternativ oder zusätzlich ist es vorteilhaft, wenn die ersten Anschlusspole eine andere Länge aufweisen als die zweiten Anschlusspole. Auf diese Weise wird ermöglicht, dass die Anschlusspole das erste Stromabgriffselement und das zweite Stromabgriffselement auf unterschiedlichen Ebenen kontaktieren.

Weitere Einzelheiten, Merkmale und Vorteile der Erfindung ergeben sich aus der nachfolgenden Beschreibung und den Figuren. Es zeigen:
- Figur 1: einen Zwischenkreiskondensator gemäß einer Ausführungsform der Erfindung,
- Figur 2: einen Querschnitt durch den in Figur 1 gezeigten Zwischenkondensator,
- Figur 3: einen Stromfluss durch den Zwischenkreiskondensator für einen ersten Wickelkondensator, und
- Figur 4: einen Stromfluss durch den Zwischenkreiskondensator für einen zweiten Wickelkondensator.

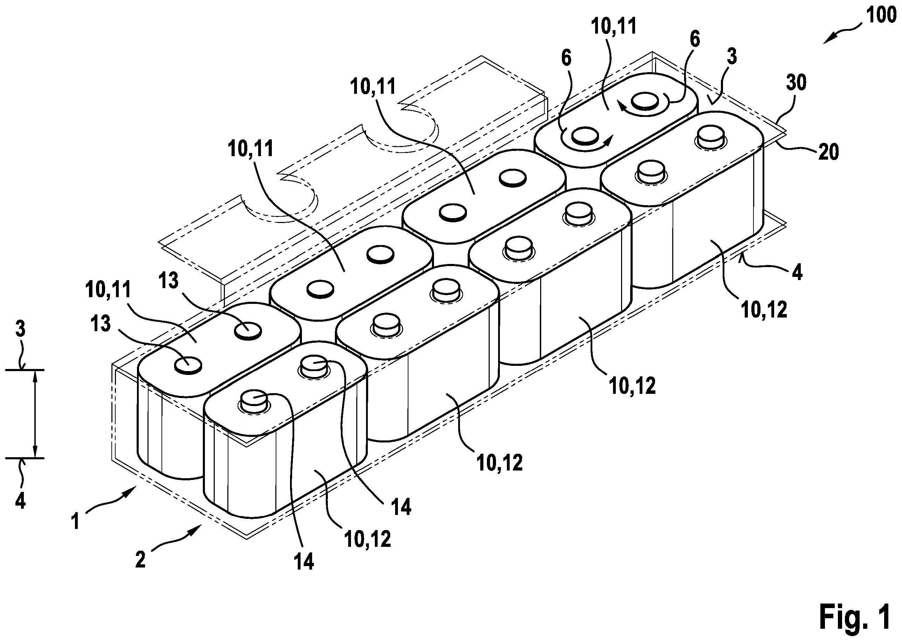

Figur 1 zeigt einen Zwischenkreiskondensator 100 gemäß einer Ausführungsform der Erfindung. Der Zwischenkreiskondensator 100 umfasst mehrere Wickelkondensatoren 10. Der in Figur 1 darstellte Zwischenkreiskondensator 100 umfasst dabei acht Wickelkondensatoren 10.

Jeder der Wickelkondensatoren 10 weist zwei erste Anschlusspole 13 und zwei zweite Anschlusspole 14 auf. Die ersten Anschlusspole 13 eines Wickelkondensators 10 können dabei als ein gemeinsamer Anschlusspol betrachtet werden. Dies gilt ebenfalls für die zweiten Anschlusspole 14 eines einzelnen Wickelkondensators 10. Im Inneren jedes der Wickelkondensatoren 10 befinden sich zwei gegenläufig gewickelte Wickeln. Dies ist durch die Pfeile 6 in Figur 1 angedeutet. Dadurch, dass die beiden Wickeln eines einzelnen Wickelkondensators 10 gegenläufig gewickelt sind, wird ein resultierendes elektromagnetisches Feld, welches beim Laden oder Entladen des jeweiligen Wickelkondensators 10 entsteht, minimiert.

Die acht Wickelkondensatoren 10 unterteilen sich in erste Wickelkondensatoren 11 und zweite Wickelkondensatoren 12.

Die ersten Wickelkondensatoren 11, in dieser Ausführungsform vier der Wickelkondensatoren 10, sind in einer ersten Reihe 1 angeordnet. Dabei sind die ersten Wickelkondensatoren 11 so angeordnet, dass deren erste Anschlusspole 13 auf einer ersten Seite 3 des Zwischenkreiskondensators 100 liegen. In Figur 1 ist die erste Seite 3 eine obere Seite des Zwischenkreiskondensators 100 und die ersten Anschlusspole 13 der ersten Wickelkondensatoren 11 liegen somit oben. Alle der ersten Anschlusspole 13 der ersten Wickelkondensatoren 11 liegen dabei auf einer gedachten Geraden.

Die zweiten Anschlusspole 14 der ersten Wickelkondensatoren 11 sind auf einer der ersten Seite 3 gegenüberliegenden zweiten Seite 4 des Zwischenkreiskondensators 100 angeordnet. In Figur 1 ist die zweite Seite 4 eine untere Seite des Zwischenkreiskondensators 100 und die zweiten Anschlusspole 14 der ersten Wickelkondensatoren 11 liegen somit unten. Auch die zweiten Anschlusspole 14 der ersten Wickelkondensatoren 11 sind auf einer gedachten Geraden angeordnet.

Die erste Seite 3 ist in Figur 1 eine obere Seite der ersten Wickelkondensatoren 11. In der in Figur 1 dargestellten Ansicht des Zwischenkondensators 100 sind daher lediglich die ersten Anschlusspole 13 der ersten Wickelkondensatoren 11 sichtbar, da die zweiten Anschlusspole 14 auf der nicht dargestellten Unterseite angeordnet sind.

Die zweiten Wickelkondensatoren 12, in dieser Ausführungsform vier der Wickelkondensatoren 10, sind in einer zweiten Reihe 2 angeordnet. Dabei sind die zweiten Wickelkondensatoren 12 so angeordnet, dass deren zweite Anschlusspole 14 auf der ersten Seite 3 des Zwischenkreiskondensators 100 liegen. In Figur 1 ist die erste Seite 3 die obere Seite des Zwischenkreiskondensators 100 und die zweiten Anschlusspole 14 der zweiten Wickelkondensatoren 12 liegen somit oben. Alle der zweiten Anschlusspole 14 der zweiten Wickelkondensatoren 12 liegen dabei auf einer gedachten Geraden.

Die ersten Anschlusspole 13 der zweiten Wickelkondensatoren 12 sind auf der zweiten Seite 4 des Zwischenkreiskondensators 100 angeordnet. In Figur 1 ist die zweite Seite 4 die untere Seite des Zwischenkreiskondensators 100 und die ersten Anschlusspole 13 der zweiten Wickelkondensatoren 12 liegen somit unten. Auch die ersten Anschlusspole 13 der zweiten Wickelkondensatoren 12 sind auf einer gedachten Geraden angeordnet.

In der in Figur 1 dargestellten Ansicht des Zwischenkondensators 100 sind daher lediglich die zweiten Anschlusspole 14 der zweiten Wickelkondensatoren 12 sichtbar, da die ersten Anschlusspole 13 auf der nicht dargestellten Unterseite angeordnet sind.

Die aus den ersten Wickelkondensatoren 11 bestehende erste Reihe 1 und die aus den zweiten Wickelkondensatoren 12 bestehende zweite Reihe 2 sind parallel zueinander in einer gemeinsamen Ebene angeordnet. Dabei ist jeweils ein zweiter Wickelkondensator 12 neben einem ersten Wickelkondensator 11 angeordnet. So liegen alle auf der ersten Seite 3 gelegenen Anschlusspole 13, 14 in einer gemeinsamen Ebene und alle auf der zweiten Seite 4 gelegenen Anschlusspole 13, 14 in einer gemeinsamen Ebene.

Soll der Zwischenkondensator 100 aufgeladen werden, so wird an alle ersten Anschlusspole 13 ein erstes Spannungspotenzial angelegt und an alle zweiten Anschlusspole 14 ein zweites Potenzial angelegt. In den Wickelkondensatoren 10 wird auf diese Weise ein Potenzial gespeichert, welches einer Potenzialdifferenz zwischen dem ersten Potenzial und dem zweiten Potenzial entspricht. Um ein solches Aufladen oder ein folgendes Entladen der Wickelkondensatoren 10 zu ermöglichen, umfasst der Zwischenkreiskondensator 100 ein erstes Stromabgriffselement 20 und ein zweites Stromabgriffselement 30.

Das erste Stromabgriffselement 20 steht in Kontakt mit den ersten Anschlusspolen 13 aller Wickelkondensatoren 10. Das zweite Stromabgriffselement 30 steht in Kontakt mit den zweiten Anschlusspolen 14 aller Wickelkondensatoren 10. Die Wickelkondensatoren 10 können somit über das erste Stromabgriffselement 20 und das zweite Stromabgriffselement 30 wahlweise geladen oder entladen werden.

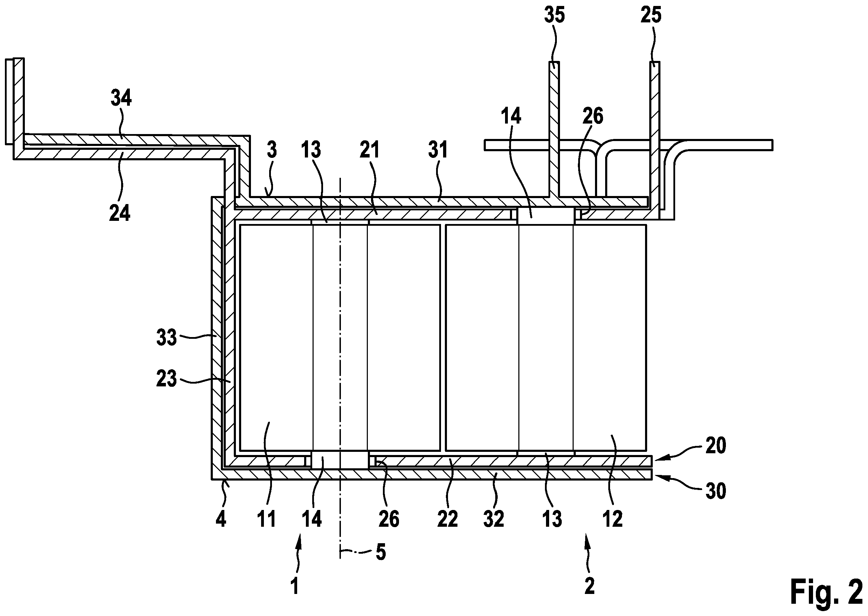

Zur weiteren Beschreibung der Stromabgriffselemente 20, 30 wird auf Figur 2 verwiesen. Figur 2 zeigt einen Querschnitt durch den in Figur 1 darstellten Zwischenkreiskondensator 100. Dabei ist in Figur 2 links einer der ersten Wickelkondensatoren 11 dargestellt und in Figur 2 rechts einer der zweiten Wickelkondensatoren 12 dargestellt.

Auf der ersten Seite 3, also in Figur 2 oben, weist der erste Wickelkondensator 11 den ersten Anschlusspol 13 auf. Auf der zweiten Seite 4, also in Figur 2 unten, weist der erste Wickelkondensator 11 den zweiten Anschlusspol 14 auf. Die ersten Anschlusspole 13 aller Wickelkondensatoren 10 und die zweiten Anschlusspole 14 aller Wickelkondensatoren 10 weisen eine unterschiedliche Länge auf. So weisen die ersten Anschlusspole 13 eine erste Länge auf und die zweiten Anschlusspole 14 weisen eine zweite Länge auf. Dabei ist eine Länge eines Anschlusspols 13, 14 dadurch definiert, wie weit sich der jeweilige Anschlusspol entlang einer Hochachse 5 erstreckt, welche den ersten Anschlusspol 13 und den zweiten Anschlusspol 14 eines Wickelkondensators 10 miteinander verbindet. In dieser Ausführungsform sind die ersten Anschlusspole 13 kürzer als die zweiten Anschlusspole 14.

Da die Wickelkondensatoren 10 derart angeordnet worden sind, dass auf der ersten Seite 3 die ersten Anschlusspole 13 der ersten Wickelkondensatoren 11 neben den zweiten Anschlusspolen 14 der zweiten Wickelkondensatoren 12 liegen, ergibt sich, dass die in den Reihen 1, 2 nebeneinander liegenden Anschlusspole 13, 14 sich unterschiedlich weit über einen Körper des jeweils zugehörigen Wickelkondensator 10 erheben. So sind die ersten Anschlusspole 13 in dieser Ausführungsform kurze Anschlusspole, und die zweiten Anschlusspole 14 sind lange Anschlusspole. Dies gilt in entsprechender Weise für die zweite Seite der Wickelkondensatoren 10.

Das erste Stromabgriffselement 20 weist einen plattenförmigen ersten Teilbereich 21 auf. Dieser erste Teilbereich 21 steht auf der ersten Seite 3 mit den ersten Anschlusspolen 13 der ersten Wickelkondensatoren 11 in Kontakt. Dazu liegt der erste Teilbereich 21 plan auf den ersten Anschlusspolen 13 der ersten Wickelkondensatoren 11 auf. Dabei erstreckt sich der erste Teilbereich 21 des ersten Stromabgriffselements 20 über alle auf der ersten Seite 3 gelegenen Anschlusspole 13, 14 hinweg. Da der erste Teilbereich 21 jedoch plan auf den ersten Anschlusspolen 13 der ersten Wickelkondensatoren 11 aufliegt, würde der erste Teilbereich 21 ebenfalls in Kontakt mit den zweiten Anschlusspolen 14 der zweiten Wickelkondensatoren 12 stehen. Um einen Kurzschluss zu vermeiden, weist das erste Stromabgriffselement 20 in dem ersten Teilbereich 21 im Bereich der zweiten Anschlusspole 14 der zweiten Wickelkondensatoren 12 Durchgangsöffnungen 26 auf. Die zweiten Anschlusspole 14 der zweiten Wickelkondensatoren 12 erstrecken sich durch diese Durchgangsöffnungen 26 hindurch. Dies ist möglich, da die zweiten Anschlusspole 14 länger als die ersten Anschlusspole 13 sind. Damit es nicht zu einem Kontakt zwischen dem ersten Teilbereich 21 des ersten Stromabgriffselements 20 und den zweiten Anschlusspolen 14 der zweiten Wickelkondensatoren 12 kommt, weisen das Durchgangsöffnungen 26 einen Innendurchmesser auf, welcher größer als ein Außendurchmesser der zweiten Anschlusspole 14 ist.

Das erste Stromabgriffselement 20 weist einen plattenförmigen zweiten Teilbereich 22 auf. Dieser zweite Teilbereich 22 steht auf der zweiten Seite 4 mit den ersten Anschlusspolen 13 der zweiten Wickelkondensatoren 12 in Kontakt. Dazu liegt der zweite Teilbereich 22 plan auf den ersten Anschlusspolen 13 der zweiten Wickelkondensatoren 12 auf. Dabei erstreckt sich der zweite Teilbereich 22 des ersten Stromabgriffselements 20 über alle auf der zweiten Seite 4 gelegenen Anschlusspole 13, 14 hinweg. Da der zweite Teilbereich 22 plan auf den ersten Anschlusspolen 13 der zweiten Wickelkondensatoren 12 aufliegt, würde der zweite Teilbereich 22 ebenfalls in Kontakt mit den zweiten Anschlusspolen 14 der ersten Wickelkondensatoren 11 stehen. Um einen Kurzschluss zu vermeiden, weist das erste Stromabgriffselement 20 in dem zweiten Teilbereich 22 im Bereich der zweiten Anschlusspole 14 der ersten Wickelkondensatoren 11 Durchgangsöffnungen 26 auf. Die zweiten Anschlusspole 14 der ersten Wickelkondensatoren 11 erstrecken sich durch diese Durchgangsöffnungen 26 hindurch. Dies ist möglich, da die zweiten Anschlusspole 14 länger als die ersten Anschlusspole 13 sind. Damit es nicht zu einem Kontakt zwischen dem zweiten Teilbereich 22 des ersten Stromabgriffselements 20 und den zweiten Anschlusspolen 14 der ersten Wickelkondensatoren 12 kommt, weisen das Durchgangsöffnungen 26 einen Innendurchmesser auf, welcher größer als ein Außendurchmesser der zweiten Anschlusspole 14 ist.

Das erste Stromabgriffselement 20 steht somit mit allen ersten Anschlusspolen 13 der Wickelkondensatoren 10 in Kontakt.

Das erste Stromabgriffselement 20 weist zudem einen plattenförmigen ersten Verbindungsbereich 23 auf, welcher den ersten Teilbereich 21 mit dem zweiten Teilbereich 22 verbindet. Dieser ist in Figur 2 links dargestellt und erstreckt sich in einer Richtung der Hochachse 5. Das erste Stromabgriffselement 20 weist somit in seinem Querschnitt die Form eines U's auf, welches die Wickelkondensatoren 10 ausgehend von der ersten Seite 3 hinüber zu der zweiten Seite 4 umfasst.

Das zweite Stromabgriffselement 30 umfasst einen plattenförmigen dritten Teilbereich 31. Dieser steht auf der ersten Seite 3, also in Figur 2 oben, mit den zweiten Anschlusspolen 14 der zweiten Wickelkondensatoren 12 in Kontakt. Dazu liegt der dritte Teilbereich 31 plan auf den zweiten Anschlusspolen 14 der zweiten Wickelkondensatoren 12 auf. Da die ersten Anschlusspole 13 der ersten Wickelkondensatoren 11 kürzer als die Anschlüsse der zweiten Anschlusspole 14 der zweiten Wickelkondensatoren 12 sind, kommt das zweite Stromabgriffselement 30 in dem dritten Teilbereich 31 nicht mit den ersten Anschlusspolen 13 der ersten Wickelkondensatoren 11 in Kontakt. Der dritte Teilbereich 31 kann auf den zweiten Anschlusspolen 14 der zweiten Wickelkondensatoren 12 aufliegen, da diese sich durch die Durchgangsöffnungen in dem ersten Teilbereich 21 des ersten Stromabgriffselements 20 hindurch erstrecken. Somit wird durch die Durchgangsöffnungen eine Kontaktierung zwischen den zweiten Anschlusspolen 14 der zweiten Wickelkondensatoren 12 und dem dritten Teilbereich 31 des zweiten Stromabgriffselements 30 ermöglicht. Der dritte Teilbereich 31 des zweiten Stromabgriffselements 30 erstreckt sich dabei auf der ersten Seite 3 über alle auf der ersten Seite 3 gelegenen Anschlusspole 13, 14 hinweg und überdeckt den gleichen Bereich wie auch der erste Teilbereich 21 des ersten Stromabgriffselements 20.

Das zweite Stromabgriffselement 30 umfasst einen plattenförmigen vierten Teilbereich 32. Dieser steht auf der zweiten Seite 4, also in Figur 2 unten, mit den zweiten Anschlusspolen 14 der ersten Wickelkondensatoren 11 in Kontakt. Dazu liegt der vierte Teilbereich 32 plan auf den zweiten Anschlusspolen 14 der ersten Wickelkondensatoren 11 auf. Da die ersten Anschlusspole 13 der zweiten Wickelkondensatoren 12 kürzer als die zweiten Anschlusspole 14 der ersten Wickelkondensatoren 11 sind, kommt das zweite Stromabgriffselement 30 in dem vierten Teilbereich 32 nicht mit den ersten Anschlusspolen 13 der zweiten Wickelkondensatoren 12 in Kontakt. Der vierte Teilbereich 32 kann auf den zweiten Anschlusspolen 14 der ersten Wickelkondensatoren 12 aufliegen, da diese sich durch die Durchgangsöffnungen 26 in dem zweiten Teilbereich 22 des ersten Stromabgriffselements 20 hindurch erstrecken. Somit wird durch die Durchgangsöffnungen 26 eine Kontaktierung zwischen den zweiten Anschlusspolen 14 der ersten Wickelkondensatoren 11 und dem vierten Teilbereich 32 des zweiten Stromabgriffselements 30 ermöglicht. Der vierte Teilbereich 32 des zweiten Stromabgriffselements 30 erstreckt sich dabei auf der zweiten Seite 4 über alle auf der zweiten Seite 4 gelegenen Anschlusspole 13, 14 hinweg und überdeckt den gleichen Bereich wie auch der zweite Teilbereich 22 des ersten Stromabgriffselements 20.

Das zweite Stromabgriffselement 30 weist zudem einen plattenförmigen zweiten Verbindungsbereich 33 auf, welcher den dritten Teilbereich 31 mit dem vierten Teilbereich 32 verbindet. Dieser ist in Figur 2 links dargestellt und erstreckt sich in einer Richtung der Hochachse 5. Das zweite Stromabgriffselement 30 weist somit in seinem Querschnitt die Form eines U's auf, welches die Wickelkondensatoren 10 ausgehend von der ersten Seite 3 hinüber zu der zweiten Seite 4 umfasst.

Somit umgreift das zweite Stromabgriffselement 30 die Wickelkondensatoren 10 in ähnlicher Weise wie das erste Stromabgriffselement 20. Dabei wird jedoch auch das erste Stromabgriffselement 20 von dem zweiten Stromabgriffselement 30 umgriffen. Dadurch, dass der erste, der zweite, der dritte und der vierte Teilbereich 21, 22, 31, 32 plan auf den Anschlusspolen 13, 14 der Wickelkondensatoren 10 aufliegen, sind der erste Teilbereich 21, der dritte Teilbereich 31, der zweite Teilbereich 22 und der vierte Teilbereich 32 parallel zueinander angeordnet. Der erste Verbindungsbereich 23 ist zudem parallel zu dem zweiten Verbindungsbereich 33 angeordnet, wobei die Verbindungsbereiche 23, 33 senkrecht zu den Teilbereichen 21, 22, 31, 32 stehen. Dabei liegt zwischen den einzelnen Bereichen des ersten Stromabgriffselements 20 und den einzelnen Bereichen des zweiten Stromabgriffselements 30 jedoch ein Abstand vor, um einen Kurzschluss zu verhindern. So liegt beispielsweise zwischen dem ersten Teilbereich 21 und dem dritten Teilbereich 31 ein Abstand von 1 mm. Ferner liegt zwischen dem zweiten Teilbereich 22 und dem vierten Teilbereich 32 beispielsweise ein Abstand von 1 mm. Ferner liegt zwischen dem ersten Verbindungsbereich 23 und dem zweiten Verbindungsbereich 33 beispielsweise ein Abstand von 1 mm.

Dadurch, dass das zweite Stromabgriffselement 30 das erste Stromabgriffselement 20 umgreift, ergibt sich, dass der erste Teilbereich 21, der zweite Teilbereich 22 und der erste Verbindungsbereich 23 zwischen dem zweiten Stromabgriffselement 30 und den Wickelkondensatoren 10 angeordnet sind.

Für eine externe Kontaktierung der Stromabgriffselemente 20, 30 weist jedes der Stromabgriffselemente 20, 30 jeweils einen Zuleitungsbereich 24, 34 auf. Diese sind in Figur 2 oben links dargestellt. So weist das erste Stromabgriffselement 20 einen ersten Zuleitungsbereich 24 auf und das zweite Stromabgriffselement 30 weist einen zweiten Zuleitungsbereich 34 auf. Die einzelnen Zuleitungsbereiche 24, 34 können mehrere Teilabschnitte aufweisen, wobei jeweils zueinander gehörige Teilabschnitte der Zuleitungsbereiche 24, 34 parallel zueinander geführt sind.

Ferner weist das erste Stromabgriffselement 20 einen Ladeanschluss 25 auf. Dieser ist als optional zu betrachten und ermöglicht eine Ladung der Wickelkondensatoren 10, falls dies nicht über den ersten Zuleitungsbereich 24 erfolgt. In entsprechender Weise weist das zweite Stromabgriffselement 30 einen zweiten Ladeanschluss 35 auf, welcher ebenfalls optional ist und ein Aufladen der Wickelkondensatoren 10 ermöglicht, falls dieses nicht über den zweiten Zuleitungsbereich 34 erfolgt.

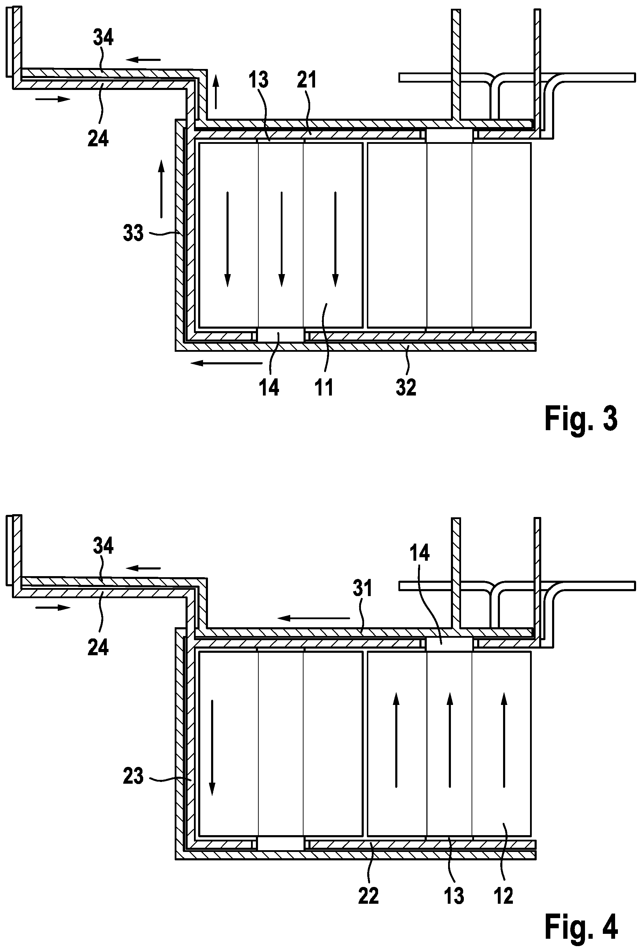

In Figuren 3 und 4 ist der in Figur 2 dargestellte Querschnitt abgebildet. Dabei ist in Figur 3 ein möglicher Stromfluss durch die ersten Wickelkondensatoren 11 abgebildet und in Figur 4 ein möglicher Stromfluss durch die zweiten Wickelkondensatoren 12 dargestellt. Figur 3 und Figur 4 stellen dabei den Zwischenkreiskondensator 100 im selben Zustand dar.

In Figur 3 ist ersichtlich, dass ein Stromfluss durch die ersten Wickelkondensatoren 11 so geführt ist, dass dieser nacheinander durch den ersten Zuleitungsbereich 24, den ersten Teilbereich 21, den ersten Anschlusspol 13 der ersten Wickelkondensatoren, die ersten Wickelkondensatoren 11, den zweiten Anschlusspol 14 der ersten Wickelkondensatoren 11, den vierten Teilbereich 32, den zweiten Verbindungsbereich 33 und abschließend durch den zweiten Zuleitungsbereich 34 erfolgt.

Hinsichtlich der zweiten Wickelkondensatoren 12 erfolgt der Stromfluss nacheinander durch den ersten Zuleitungsbereich 24, den ersten Verbindungsbereich 23, den zweiten Teilbereich 22, den ersten Anschlusspol 13 der zweiten Wickelkondensatoren 12, die zweiten Wickelkondensatoren 12, den zweiten Anschlusspol 14 der zweiten Wickelkondensatoren 12, den dritten Teilbereich 31 und abschließend durch den zweiten Zuleitungsbereich 34.

Aus den Figuren 3 und 4 ist ersichtlich, dass jeweils zueinander gehörige Bereiche des ersten und zweiten Stromabgriffselements 20, 30 den Strom in unterschiedliche Richtungen leiten. Zugleich wird der Strom durch die ersten Wickelkondensatoren 11 in umgekehrter Richtung geleitet, als dieser durch die zweiten Wickelkondensatoren 12 geleitet wird. Dadurch, dass jedem Stromfluss in dem Zwischenkreiskondensator 100 ein angrenzender, entgegengerichteter Stromfluss zugeordnet ist, werden ungewollte elektromagnetische Felder minimiert.

Die Stromabgriffselemente 20, 30 sind insbesondere HV+ und HV-Stromschienen. Diese sind über und unter den Wickelkondensatoren 10 differenziell geführt. Die Strompfade über die ersten Wickelkondensatoren 11 und über die zweiten Wickelkondensatoren 12 bilden zusammen eine volldifferenzielle Stromverteilung, welche eine minimale Induktivität und homogene Stromauslastung der Wickelkondensatoren 10 ermöglicht.

Es wird darauf hingewiesen, dass in einer alternativen Ausführungsform die Anschlusspole 13, 14 der Wickelkondensatoren 10 eine gleiche Länge aufweisen. In einer solchen Ausführungsform ist es vorteilhaft, wenn die ersten Wickelkondensatoren und die zweiten Wickelkondensatoren 12 gegeneinander versetzt angeordnet sind, so dass die zweiten Anschlusspole 14 sich durch die Durchgangsöffnungen des ersten Stromabgriffselements 20 hindurch erstrecken können.

Nebst obenstehender Offenbarung wird explizit auf die Offenbarung der Figuren 1 bis 4 verwiesen.

### Bezugszeichenliste:

- 100: Zwischenkreiskondensator

- 1: erste Reihe
- 2: zweite Reihe
- 3: erste Seite
- 4: zweite Seite
- 5: Hochachse
- 6: Pfeile

- 10: Wickelkondensatoren
- 11: erster Wickelkondensator
- 12: zweiter Wickelkondensator

- 13: erster Anschlusspol
- 14: zweiter Anschlusspol

- 20: erstes Stromabgriffselement
- 21: erster Teilbereich
- 22: zweiter Teilbereich
- 23: erster Verbindungsbereich
- 24: erster Zuleitungsbereich
- 25: erster Ladeanschluss
- 26: Durchgangsöffnungen

- 30: zweites Stromabgriffselement
- 31: dritter Teilbereich
- 32: vierter Teilbereich
- 33: zweiter Verbindungsbereich
- 34: zweiter Zuleitungsbereich
- 35: zweiter Ladeanschluss

## Patentansprüche

1. Zwischenkreiskondensator (100), umfassend:
• mehrere Wickelkondensatoren (10), welche einen ersten Anschlusspol (13) und einen zweiten Anschlusspol (14) aufweisen,
• ein erstes Stromabgriffselement (20), über welches die ersten Anschlusspole (13) kontaktiert sind, und
• ein zweites Stromabgriffselement (30), über welches die zweiten Anschlusspole (14) kontaktiert sind,
• wobei erste Wickelkondensatoren (11) der Wickelkondensatoren (10) in einer ersten Reihe (1) angeordnet sind, wobei die ersten Wickelkondensatoren (11) so ausgerichtet sind, dass die ersten Anschlusspole (13) auf einer ersten Seite (3) und die zweiten Anschlusspole (14) auf einer zweite Seite (4) des Zwischenkreiskondensators (100) angeordnet sind, wobei die erste Seite (3) und die zweite Seite (4) gegenüberliegende Seiten sind, und
• wobei zweite Wickelkondensatoren (12) der Wickelkondensatoren (10) in einer zweiten Reihe (2) angeordnet sind, wobei die erste Reihe (1) und die zweite Reihe (2) parallel zueinander in einer gemeinsamen Ebene angeordnet sind, wobei die zweiten Wickelkondensatoren (12) so ausgerichtet sind, dass die ersten Anschlusspole (13) auf der zweiten Seite (4) und die zweiten Anschlusspole (14) auf der ersten Seite (3) angeordnet sind,
**dadurch gekennzeichnet, dass**
• das erste Stromabgriffselement (20) einen plattenförmigen ersten Teilbereich (21) aufweist, welcher auf der ersten Seite (3) mit den ersten Anschlusspolen (13) der ersten Wickelkondensatoren (11) in Kontakt steht, und einen plattenförmigen zweiten Teilbereich (22) aufweist, welcher auf der zweiten Seite (4) mit den ersten Anschlusspolen (13) der zweiten Wickelkondensatoren (12) in Kontakt steht, und/oder
• das zweite Stromabgriffselement (30) einen plattenförmigen dritten Teilbereich (31) aufweist, welcher auf der ersten Seite (3) mit den zweiten Anschlusspolen (14) der zweiten Wickelkondensatoren (12) in Kontakt steht, und einen plattenförmigen vierten Teilbereich (32) aufweist, welcher auf der zweiten Seite (4) mit den zweiten Anschlusspolen (14) der ersten Wickelkondensatoren (11) in Kontakt steht.

2. Zwischenkreiskondensator (100) gemäß Anspruch 1, **dadurch gekennzeichnet, dass**
• der erste Teilbereich (21) des ersten Stromabgriffselements (20) im Bereich der zweiten Anschlusspole (14) der zweiten Wickelkondensatoren (12) Durchgangsöffnungen (26) aufweist, um eine Kontaktierung zwischen den zweiten Anschlusspolen (14) der zweiten Wickelkondensatoren (12) und dem dritten Teilbereich (31) des zweiten Stromabgriffselements (30) zu ermöglichen, und/oder
• der zweite Teilbereich (22) des ersten Stromabgriffselements (20) im Bereich der zweiten Anschlusspole (14) der ersten Wickelkondensatoren (11) Durchgangsöffnungen (26) aufweist, um eine Kontaktierung zwischen den zweiten Anschlusspolen (14) der ersten Wickelkondensatoren (11) und dem vierten Teilbereich (32) des zweiten Stromabgriffselements (30) zu ermöglichen.

3. Zwischenkreiskondensator (100) gemäß einem der voranstehenden Ansprüche 1 oder 2,
**dadurch gekennzeichnet, dass**
• das erste Stromabgriffselement (20) einen plattenförmigen ersten Verbindungsbereich (23) aufweist, welcher den ersten Teilbereich (21) mit dem zweiten Teilbereich (22) verbindet,
• das zweite Stromabgriffselement (30) einen plattenförmigen zweiten Verbindungsbereich (33) aufweist, welcher den dritten Teilbereich (31) mit dem vierten Teilbereich (32) verbindet,
• wobei der erste Verbindungssbereich (23) parallel zu dem zweiten Verbindungssbereich (33) angeordnet ist.

4. Zwischenkreiskondensator gemäß Anspruch 3, **dadurch gekennzeichnet, dass** der erste Teilbereich (21) parallel zu dem dritten Teilbereich (31) angeordnet ist und der zweite Teilbereich (22) parallel zu dem vierten Teilbereich (32) angeordnet ist, wobei der erste Teilbereich (21), der zweite Teilbereich (22) und der erste Verbindungsbereich (23) des ersten Stromabgriffselements (20) zwischen dem zweiten Stromabgriffselement (30) und den Wickelkondensatoren (10) angeordnet sind.

5. Zwischenkreiskondensator (100) gemäß einem der voranstehenden Ansprüche 1 bis 4, **dadurch gekennzeichnet, dass**
• der erste Teilbereich (21) des ersten Stromabgriffselements (20) und der dritte Teilbereich (31) des zweiten Stromabgriffselements (30) sich über alle auf der ersten Seite (3) gelegenen Anschlusspole (13, 14) hinweg erstrecken, und/oder
• der zweite Teilbereich (22) des ersten Stromabgriffselements (20) und der vierte Teilbereich (32) des zweiten Stromabgriffselements (30) sich über alle auf der zweiten Seite (4) gelegenen Anschlusspole (13, 14) hinweg erstrecken.

6. Zwischenkreiskondensator (100) gemäß einem der voranstehenden Ansprüche, **dadurch gekennzeichnet, dass** die Wickelkondensatoren (10) jeweils zwei gegenläufig gewickelte Wickel umfassen.

7. Zwischenkreiskondensator gemäß einem der voranstehenden Ansprüche, **dadurch gekennzeichnet, dass** jeder der Wickelkondensatoren (10) jeweils zwei erste Anschlusspole (13) und zwei zweite Anschlusspole (14) umfasst.

8. Zwischenkreiskondensator gemäß einem der voranstehenden Ansprüche, **dadurch gekennzeichnet, dass** das erste Stromabgriffselement (20) und das zweite Stromabgriffselement (30) jeweils einen Zuleitungsbereich (24, 34) umfasst, wobei die Zuleitungsbereiche (24, 34) parallel zueinander geführt sind.

9. Zwischenkreiskondensator (100) gemäß einem der voranstehenden Ansprüche, **dadurch gekennzeichnet, dass** die ersten Wickelkondensatoren (11) in Richtung einer zwischen den ersten Anschlusspolen (13) und den zweiten Anschlusspolen (14) der ersten Wickelkondensatoren (11) verlaufenden Hochachse (5) versetzt gegenüber den zweiten Wickelkondensatoren (12) angeordnet sind, und/oder die ersten Anschlusspole (13) eine andere Länge aufweisen als die zweiten Anschlusspole (14).

## Claims

1. DC-link capacitor (100), comprising:
• a plurality of wound capacitors (10) that have a first connection pole (13) and a second connection pole (14),
• a first current-tapping element (20), by means of which the first connection poles (13) are contacted, and
• a second current-tapping element (30), by means of which the second connection poles (14) are contacted,
• wherein first wound capacitors (11) of the wound capacitors (10) are arranged in a first row (1), wherein the first wound capacitors (11) are oriented such that the first connection poles (13) are arranged on a first side (3) and the second connection poles (14) are arranged on a second side (4) of the DC-link capacitor (100), wherein the first side (3) and the second side (4) are opposite sides, and
• wherein second wound capacitors (12) of the wound capacitors (10) are arranged in a second row (2), wherein the first row (1) and the second row (2) are arranged parallel to one other in a common plane, wherein the second wound capacitors (12) are oriented such that the first connection poles (13) are arranged on the second side (4) and the second connection poles (14) are arranged on the first side (3),
**characterized in that**
• the first current-tapping element (20) has a plate-type first subregion (21) which, on the first side (3), is in contact with the first connection poles (13) of the first wound capacitors (11), and a plate-type second subregion (22) which, on the second side (4), is in contact with the first connection poles (13) of the second wound capacitors (12), and/or
• the second current-tapping element (30) has a plate-type third subregion (31) which, on the first side (3), is in contact with the second connection poles (14) of the second wound capacitors (12), and a plate-type fourth subregion (32) which, on the second side (4), is in contact with the second connection poles (14) of the first wound capacitors (11) .

2. DC-link capacitor (100) according to Claim 1, **characterized in that**
• the first subregion (21) of the first current-tapping element (20), in the region of the second connection poles (14) of the second wound capacitors (12), comprises through-openings (26) in order to permit contacting between the second connection poles (14) of the second wound capacitors (12) and the third subregion (31) of the second current-tapping element (30), and/or
• the second subregion (22) of the first current-tapping element (20), in the region of the second connection poles (14) of the first wound capacitors (11), comprises through-openings (26) in order to permit contacting between the second connection poles (14) of the first wound capacitors (11) and the fourth subregion (32) of the second current-tapping element (30).

3. DC-link capacitor (100) according to either of the preceding Claims 1 and 2, **characterized in that**
• the first current-tapping element (20) has a plate-type first connection region (23) that connects the first subregion (21) to the second subregion (22),
• the second current-tapping element (30) has a plate-type second connection region (33) that connects the third subregion (31) to the fourth subregion (32),
• wherein the first connection region (23) is arranged parallel to the second connection region (33).

4. DC-link capacitor according to Claim 3, **characterized in that** the first subregion (21) is arranged parallel to the third subregion (31), and the second subregion (22) is arranged parallel to the fourth subregion (32), wherein the first subregion (21), the second subregion (22) and the first connection region (23) of the first current-tapping element (20) are arranged between the second current-tapping element (30) and the wound capacitors (10).

5. DC-link capacitor (100) according to one of the preceding Claims 1 to 4, **characterized in that**
• the first subregion (21) of the first current-tapping element (20) and the third subregion (31) of the second current-tapping element (30) extend over all the connection poles (13, 14) arranged on the first side (3), and/or
• the second subregion (22) of the first current-tapping element (20) and the fourth sub-region (32) of the second current-tapping element (30) extend over all the connection poles (13, 14) arranged on the second side (4).

6. DC-link capacitor (100) according to one of the preceding claims, **characterized in that** the wound capacitors (10) each comprise two oppositely wound windings.

7. DC-link capacitor according to one of the preceding claims, **characterized in that** each of the wound capacitors (10) respectively comprises two first connection poles (13) and two second connection poles (14) .

8. DC-link capacitor according to one of the preceding claims, **characterized in that** the first current-tapping element (20) and the second current-tapping element (30) each comprise an infeed region (24, 34), wherein the infeed regions (24, 34) are configured in a mutually parallel arrangement.

9. DC-link capacitor (100) according to one of the preceding claims, **characterized in that** the first wound capacitors (11), in the direction of a vertical axis (5) that runs between the first connection poles (13) and the second connection poles (14) of the first wound capacitors (11), are arranged offset in relation to the second wound capacitors (12), and/or the first connection poles (13) are of a different length to the second connection poles (14).

## Revendications

1. Condensateur de circuit intermédiaire (100), comprenant :
• plusieurs condensateurs bobinés (10) qui présentent un premier pôle de raccordement (13) et un deuxième pôle de raccordement (14),
• un premier élément de prélèvement de courant (20) par l'intermédiaire duquel les premiers pôles de raccordement (13) sont mis en contact, et
• un deuxième élément de prélèvement de courant (30) par l'intermédiaire duquel les deuxièmes pôles de raccordement (14) sont mis en contact,
• dans lequel des premiers condensateurs bobinés (11) des condensateurs bobinés (10) sont disposés dans une première rangée (1), dans lequel les premiers condensateurs bobinés (11) sont orientés de telle sorte que les premiers pôles de raccordement (13) sont disposés sur un premier côté (3) et les deuxièmes pôles de raccordement (14) sont disposés sur un deuxième côté (4) du condensateur de circuit intermédiaire (100), le premier côté (3) et le deuxième côté (4) étant des côtés opposés, et
• dans lequel des deuxièmes condensateurs bobinés (12) des condensateurs bobinés (10) sont disposés dans une deuxième rangée (2), dans lequel la première rangée (1) et la deuxième rangée (2) sont disposées en parallèle l'une à l'autre dans un plan commun, dans lequel les deuxièmes condensateurs bobinés (12) sont orientés de telle sorte que les premiers pôles de raccordement (13) sont disposés sur le deuxième côté (4) et les deuxièmes pôles de raccordement (14) sont disposés sur le premier côté (3),
**caractérisé en ce que**
• le premier élément de prélèvement de courant (20) présente une première zone partielle en forme de plaque (21) qui est en contact sur le premier côté (3) avec les premiers pôles de raccordement (13) des premiers condensateurs bobinés (11), et présente une deuxième zone partielle en forme de plaque (22) qui est en contact sur le deuxième côté (4) avec les premiers pôles de raccordement (13) des deuxièmes condensateurs bobinés (12), et/ou
• le deuxième élément de prélèvement de courant (30) présente une troisième zone partielle en forme plaque (31) qui est en contact sur le premier côté (3) avec les deuxièmes pôles de raccordement (14) des deuxièmes condensateurs bobinés (12), et présente une quatrième zone partielle en forme de plaque (32) qui est en contact sur le deuxième côté (4) avec les deuxièmes pôles de raccordement (14) des premiers condensateurs bobinés (11).

2. Condensateur de circuit intermédiaire (100) selon la revendication 1, **caractérisé en ce que**
• la première zone partielle (21) du premier élément de prélèvement de courant (20) présente au niveau des deuxièmes pôles de raccordement (14) des deuxièmes condensateurs bobinés (12) des orifices de passage (26) afin de permettre une mise en contact entre les deuxièmes pôles de raccordement (14) des deuxièmes condensateurs bobinés (12) et la troisième zone partielle (31) du deuxième élément de prélèvement de courant (30), et/ou
• la deuxième zone partielle (22) du premier élément de prélèvement de courant (20) présente au niveau des deuxièmes pôles de raccordement (14) des premiers condensateurs bobinés (11) des orifices de passage (26) afin de permettre une mise en contact entre les deuxièmes pôles de raccordement (14) des premiers condensateurs bobinés (11) et la quatrième zone partielle (32) du deuxième élément de prélèvement de courant (30).

3. Condensateur de circuit intermédiaire (100) selon l'une quelconque des revendications précédentes 1 ou 2, **caractérisé en ce que**
• le premier élément de prélèvement de courant (20) présente une première zone de liaison en forme de plaque (23) qui relie la première zone partielle (21) à la deuxième zone partielle (22),
• le deuxième élément de prélèvement de courant (30) présente une deuxième zone de liaison en forme de plaque (33) qui relie la troisième zone partielle (31) à la quatrième zone partielle (32),
• dans lequel la première zone de liaison (23) est disposée en parallèle à la deuxième zone de liaison (33) .

4. Condensateur de circuit intermédiaire selon la revendication 3, **caractérisé en ce que** la première zone partielle (21) est disposée en parallèle à la troisième zone partielle (31) et la deuxième zone partielle (22) est disposée en parallèle à la quatrième zone partielle (32), dans lequel la première zone partielle (21), la deuxième zone partielle (22) et la première zone de liaison (23) du premier élément de prélèvement de courant (20) sont disposées entre le deuxième élément de prélèvement de courant (30) et les condensateurs bobinés (10).

5. Condensateur de circuit intermédiaire (100) selon l'une quelconque des revendications précédentes 1 à 4, **caractérisé en ce que**
• la première zone partielle (21) du premier élément de prélèvement de courant (20) et la troisième zone partielle (31) du deuxième élément de prélèvement de courant (30) s'étendent sur tous les pôles de raccordement (13, 14) situés sur le premier côté (3), et/ou
• la deuxième zone partielle (22) du premier élément de prélèvement de courant (20) et la quatrième zone partielle (32) du deuxième élément de prélèvement de courant (30) s'étendent sur tous les pôles de raccordement (13, 14) situés sur le deuxième côté (4).

6. Condensateur de circuit intermédiaire (100) selon l'une quelconque des revendications précédentes, **caractérisé en ce que** les condensateurs bobinés (10) comprennent respectivement deux bobinages enroulés en sens opposé.

7. Condensateur de circuit intermédiaire selon l'une quelconque des revendications précédentes, **caractérisé en ce que** chacun des condensateurs bobinés (10) comprend respectivement deux premiers pôles de raccordement (13) et deux deuxièmes pôles de raccordement (14).

8. Condensateur de circuit intermédiaire selon l'une quelconque des revendications précédentes, **caractérisé en ce que** le premier élément de prélèvement de courant (20) et le deuxième élément de prélèvement de courant (30) comprennent respectivement une zone d'amenée (24, 34), les zones d'amenée (24, 34) étant placées en parallèle l'une à l'autre.

9. Condensateur de circuit intermédiaire (100) selon l'une quelconque des revendications précédentes, **caractérisé en ce que** les premiers condensateurs bobinés (11) sont disposés en direction d'un axe vertical (5) s'étendant entre les premiers pôles de raccordement (13) et les deuxièmes pôles de raccordement (14) des premiers condensateurs bobinés (11) de manière décalée par rapport aux deuxièmes condensateurs bobinés (12), et/ou les premiers pôles de raccordement (13) présentent une longueur différente des deuxièmes pôles de raccordement (14).
